# EUROPÄISCHE PATENTSCHRIFT

(11) **EP 3 332 400 B1**
(45) Veröffentlichungstag und Bekanntmachung des Hinweises auf die Patenterteilung: **14.02.2024**
(21) Anmeldenummer: 16750104.8
(22) Anmeldetag: 13.07.2016
(51) Int. Cl.: G08G 1/16, G01S 15/93, G01S 13/93, G08G 1/14, G01S 17/93, B60W 40/04, G01S 13/931, G06V 20/58, G06F 16/29, G01S 17/931, G01S 15/931

(54) **VERFAHREN UND VORRICHTUNG IN EINEM KRAFTFAHRZEUG ZUR VERBESSERTEN DATENFUSIONIERUNG BEI EINER UMFELDERFASSUNG**
METHOD AND DEVICE IN A MOTOR VEHICLE FOR IMPROVED DATA FUSION IN AN ENVIRONMENT DETECTION
PROCÉDÉ ET DISPOSITIF DANS UN VÉHICULE AUTOMOBILE POUR LA FUSION AMÉLIORÉE DE DONNÉES LORS D'UNE DÉTECTION D'UN ENVIRONNEMENT

(30) Priorität: 03.08.2015 DE 102015214743
(43) Veröffentlichungstag der Anmeldung: 13.06.2018
(73) Patentinhaber: Volkswagen Aktiengesellschaft, 38440 Wolfsburg (DE); AUDI AG, 85045 Ingolstadt (DE)
(72) Erfinder: STEINMEYER, Simon, 38102 Braunschweig (DE); MOSSAU, Daniel, 38448 Wolfsburg (DE); MUSIAL, Marek, 10551 Berlin (DE); BIRBACH, Oliver, 38100 Braunschweig (DE); GLÄSSER, Patrick, 85307 Paunzhausen (DE); KUBERTSCHAK, Tim, 85055 Ingolstadt (DE)
(74) Vertreter: Patentanwälte Bressel und Partner mbB
(86) Internationale Anmeldenummer: PCT/EP2016/066650
(87) Internationale Veröffentlichungsnummer: WO 2017/021119

(56) Entgegenhaltungen:
- EP-A2- 2 366 503
- DE-A1-102006 061 390
- DE-A1-102012 014 939
- DE-A1-102013 018 721

## Beschreibung

Die Erfindung betrifft ein Verfahren und eine Vorrichtung in einem Kraftfahrzeug zur verbesserten Datenfusionierung bei einer Umfelderfassung Moderne Kraftfahrzeuge bieten eine Fülle von Assistenzsystemen, welche den Fahrer beim Führen des Kraftfahrzeugs unterstützen. Ein solches Assistenzsystem ist beispielsweise ein Einparkassistent, welcher zur Unterstützung des Einparkens zusätzliche Informationen, beispielsweise den Abstand zu benachbarten Kraftfahrzeugen oder Hindernissen optisch oder akustisch bereitstellt und bei Kollisionsgefahr ein Warnsignal ausgibt. Ferner sind auch halbautomatische und vollautomatische Einparkassistenten bekannt.

Um Hilfsfunktionen, die den Abstand zu benachbarten Kraftfahrzeugen oder Hindernissen angeben und/oder überwachen, bereitstellen zu können, müssen die Einparkassistenten stets über den Zustand des Umfeldes des Kraftfahrzeuges informiert sein. In der Regel wird dazu das Umfeld mit Hilfe von Sensoren, beispielsweise mittels Ultraschall, Radar, Laser etc. erfasst. Anhand der Sensordaten werden anschließend, beispielsweise über Mustererkennungsverfahren, Objekte in dem Umfeld erkannt und bezüglich ihrer Position in dem Umfeld ausgewertet und/oder in einer Umfeldkarte zum späteren Abruf hinterlegt.

Aus der DE 10 2007 056 622 A1 sind ein Verfahren zum Erkennen einer Parklücke bekannt. Dabei wird zur Ermittlung einer geeigneten Parklücke für ein Fahrzeug mittels Sensoren zur Vermessung von Lücken zwischen seitlich vom Fahrzeug erkannten Objekten, bei dem die Sensoren zur Vermessung von Lücken zwischen seitlich vom Fahrzeug erkannten Objekten sowohl rechts als auch links vom Fahrzeug aktivierbar sind, bei Stillstand des eigenen Fahrzeugs überprüft, ob sich die Signale der Sensoren während des Stillstandes ändern. Bei einer Weiterfahrt nach einem Stillstand des eigenen Fahrzeuges wird die Erkennung einer geeigneten Parklücke oder einer beginnenden Parklücke auf einer Fahrzeugseite als ungültig verworfen, wenn sich während des vorangegangenen Stillstandes des eigenen Fahrzeuges die Signale der Sensoren auf dieser Fahrzeugseite geändert haben.

Aus der DE 10 2009 012 435 B4 ist eine Vorrichtung und ein Verfahren zum Detektieren eines freien Parkplatzes bekannt. Dazu ist vorgesehen, eine Bildsequenz durch Erfassen der Bilder von freien Parkplätzen mit einer Fahrzeugrückblickbilderfassungseinrichtung oder -kamera zu erfassen, die Ansicht hinter dem Fahrzeug bzw. Automobil unter Verwendung von Punktkorrespondenzen in der Bildsequenz dreidimensional zu rekonstruieren und metrische Informationen über die 3D-Strukturen anhand der bekannten Kamerahöhe wiederzugewinnen und freie Parkplätze durch Schätzen der Positionen von benachbarten Fahrzeugen zu detektieren. Dabei ist auch eine Bewertung der Genauigkeit beim Schätzen der Eckpunkte und Orientierungen der benachbarten Fahrzeuge vorgesehen.

Aus der EP 2 366 503 A2 sind eine Vorrichtung und ein Verfahren bekannt, bei denen eine Existenzwahrscheinlichkeit eines Objektes in einer Umfeldkarte in Abhängigkeit eines aktuellen Umfelds verändert wird.

Aus der DE 10 2006 061390 A1 ist ein Umfelderfassungssystem eines Kraftfahrzeugs mit einer Sensorik zum Erfassen von Messsignalen bekannt, die Informationen über Objekte im Umfeld des Kraftfahrzeugs liefern, einer Auswerteeinheit, die die Informationen der Messsignale anhand eines Wahrscheinlichkeitsverfahrens in eine Zellen umfassende Umfeldkarte fusioniert. Jeder Zelle ist hierbei mindestens ein Wahrscheinlichkeitswert zugeordnet, der ein Maß für eine Anwesenheit eines der Objekte in dem mit der Zelle korrespondierenden Raumbereich des Umfelds angibt.

Aus der DE 10 2012 014 939 A1 sind eine Kollisionsvermeidungsvorrichtung und ein Kollisionsvermeidungsverfahren bekannt, umfassend einen oder mehrere erste Umfeldsensoren, deren Messdaten eine Information über einen Abstand von Objekten im Umfeld des Fahrzeugs liefern, und eine Auswerte- und Fusionseinrichtung, die anhand der Messdaten des einen oder der mehreren ersten Umfeldsensoren eine Umfeldkarte des Fahrzeugs ermittelt, anhand welcher für einzelne Bereiche in dem Umfeld des Fahrzeugs Wahrscheinlichkeitsangaben für eine Existenz eines Objekts in diesem einzelnen Bereich ableitbar ist, sowie eine Prädiktionseinrichtung, welche ausgebildet ist, Steuer- und/oder Warninformationen für eine kollisionsfreie prädizierte Bewegung einer Fahrzeugkomponente anhand der Umfeldkarte zu ermitteln und bereitzustellen, wobei die Kollisionsfreiheit der prädizierten Bewegung von der Existenzwahrscheinlichkeit eines Objekts in dem mindestens einen ausgezeichneten Bereich abhängig ist, wobei mindestens ein zweiter Umfeldsensor mit der Auswerte- und Fusionseinrichtung gekoppelt ist, welcher ausgebildet ist, bei einem Stillstand des Fahrzeugs eine Bewegung eines Objekts relativ zu dem Fahrzeug zumindest in einem Gebiet des Umfelds des Fahrzeugs zu erfassen, welches den mindestens einen ausgezeichneten Bereich umfasst, und wobei die Auswerte- und Fusionseinrichtung ausgebildet ist, die Umfeldkarte bei einer erkannten Bewegung in dem einen Gebiet so zu verändern, dass zumindest die aus der Umfeldkarte für den mindestens einen ausgezeichneten Bereich ableitbare Wahrscheinlichkeit verändert wird.

Ein Nachteil der vorgenannten Vorrichtungen und Verfahren ist, dass Messartefakte nicht als solche erkannt werden. Dies ist besonders schwerwiegend, wenn Objekte oder Teile von Objekten, die in einer Umfeldkarte hinterlegt sind, auf Grund von Messartefakten gelöscht werden, obwohl sie an ihrer ursprünglichen Position noch unverändert existieren. Ein solcher Messartefakt tritt beispielsweise bei Impuls-Echo-Messverfahren dann auf, wenn die Oberfläche eines Objekts so ausgerichtet ist, dass ein Großteil der Leistung, welche von einem Sensor ausgesandt wird, nicht in Richtung des Sensors zurück, sondern vom Sensor weg reflektiert wird. Da der Sensor aus der Richtung des Objekts bzw. von der Stelle des Objekts keine Reflexion misst, kommt es zu einer Fehlinterpretation der Messdaten. Der vom Objekt oder einem Teil des Objekts eingenommene Bereich in der Umgebung des Sensors, d. h. des Fahrzeugs, wird als Freibereich eingestuft. In einer auf die Messung folgenden Fusionierung der Messdaten wird dann an der Position des Objektes oder des Teils des Objekts fälschlicherweise ein Freibereich angenommen, wodurch eine dem Objekt oder Teil des Objekts zugeordnete Existenzwahrscheinlichkeit reduziert wird oder das Objekt oder der Teils des Objekts als nicht mehr existent angenommen wird.

Der Erfindung liegt somit das Problem zugrunde, ein Verfahren und eine Vorrichtung zum Erfassen eines Umfeldes zu schaffen, bei dem die Datenfusionierung verbessert ist.

Die technische Aufgabe wird erfindungsgemäß durch ein Verfahren mit den Merkmalen des Patentanspruchs 1 und eine Vorrichtung mit den Merkmalen des Patentanspruchs 17 gelöst. Vorteilhafte Ausgestaltungen der Erfindung ergeben sich aus den Unteransprüchen.

### Grundidee der Erfindung

Der Erfindung liegt der Gedanke zugrunde, Bereiche, in denen im Umfeld positionierte Objekte eine Oberfläche aufweisen, welche auf Grund ihrer Orientierung das von einem Sensor ausgesandte Messsignal nicht zum Sensor zurück reflektieren, beim Fusionieren der Messdaten nicht berücksichtigt werden. Die Kernidee der Erfindung ist dabei, erkannten Objekten in dem Umfeld mindestens ein Orientierungsattribut zuzuordnen. Dazu werden Objekte in den von dem Umfeld von mindestens einem Sensor erfassten Messdaten erkannt und für die erkannten Objekte jeweils Orientierungsattribute geschätzt. Bei der Datenfusionierung wird dann die Existenzwahrscheinlichkeit eines in der Umfeldkarte hinterlegten Objektes in Abhängigkeit des Orientierungsattributes reduziert.

Beispielsweise kann ein erfindungsgemäßes Orientierungsattribut eine Oberflächenorientierung sein. Die Oberflächenorientierungen werden für erkannte Objekte geschätzt, mit den erkannten Objekten verknüpft und in einer Umfeldkarte hinterlegt. Wird bei einem anschließenden Erfassen des Umfeldes für einen Bereich im Messbereich eines Sensors ein Freibereich gemessen, so wird überprüft, ob in dem korrespondierenden Bereich in der Umfeldkarte ein Objekt hinterlegt ist. Ist ein Objekt für den Bereich des Sensorbereichs in der Umfeldkarte hinterlegt, so wird ein Anmesswinkel zu diesem hinterlegten Objekt geschätzt. Dieses bedeutet, dass der Anmesswinkel bei einem Ausgedehnten Objekt zu dem Teil des Objekts bestimmt wird, der sich in dem gemessenen Freibereich befindet. Anschließend wird die mit dem hinterlegten Objekt verknüpfte mindestens eine Oberflächenorientierung aus der Umfeldkarte abgerufen. Aus dem geschätzten Anmesswinkel und der mindestens einen Oberflächenorientierung, beispielsweise einer Oberflächennormale, des hinterlegten Objektes wird dann ein Differenzwinkel bestimmt. Überschreitet der bestimmte Differenzwinkel einen Schwellwert, so wird die Existenzwahrscheinlichkeit des Objektes beim Fusionieren nicht reduziert oder einen geringeren Betrag reduziert, und die Messdaten in dem Bereich verworfen.

Der Vorteil der Erfindung liegt darin, dass Messartefakte, die fälschlich Freibereiche anzeigen, welche auf Grund von Reflexionen, die beispielsweise an Objektoberflächen unter einem spitzen Winkel auftreten, erkannt und beim Fusionieren entsprechend berücksichtigt werden, beispielsweise vorzugsweise verworfen werden. Sie können somit das Pflegen der Umfeldkarte nicht beeinträchtigen oder verfälschen. Das Berücksichtigen von Orientierungsattributen der erkannten Objekte, wie beispielsweise Oberflächenorientierungen, ermöglicht es, in einer Messung die Orientierung der Oberfläche eines in der Umfeldkarte hinterlegten Objektes abzuschätzen und somit einen für eine Messung ungünstigen Winkel zu identifizieren. Bereiche, die auf Grund eines an einer Objektoberfläche vollständig vom Sensor weg reflektierten Messsignals als Freibereiche erscheinen, werden dann nicht als Freibereiche fehlinterpretiert. Die zugehörigen Messdaten werden beim Fusionieren verworfen und das Objekt ist weiterhin mit der gleichen Existenzwahrscheinlichkeit in der Umfeldkarte hinterlegt.

Dadurch ist die Abbildung des Umfeldes des Kraftfahrzeugs in der Umfeldkarte verbessert, wodurch Assistenzsysteme, welche auf die Umfeldkarte zurückgreifen zuverlässiger und sicherer arbeiten können.

### Definitionen

Ein Sensor soll im Folgenden einen Messfühler bezeichnen, der geeignet ist, Objekte in einem Umfeld eines Kraftfahrzeugs ortsaufgelöst zu erfassen. Ein Sensor kann beispielsweise ein Ultraschallsensor, ein Radarsensor, ein Infrarotsensor, ein Bilderfassungssystem (TopView/AreaView etc.) oder ein Laserscanner sein.

Ein Messartefakt ist ein Messergebnis, welches lediglich auf Grund der Eigenschaften der verwendeten Messmethode entstanden ist. Im Folgenden bezeichnet ein Messartefakt insbesondere ein Messergebnis eines nach zu einem Impuls-Echo-Verfahrens arbeitenden Sensor, das durch ein größtenteils oder vollständig vom Sensor weg reflektiertes anstatt zurückreflektiertes Sendesignal entstanden ist und deshalb fälschlich als Freibereich erscheint. Der Begriff Echo wird hier in einem umfassenden Sinn verstanden und beschränkt sich nicht ausschließlich auf akustische Signale. Auch zurückreflektierte elektromagnetische Wellen eines ausgesandten Radarimpulses bei einem Radarsensor, ein reflektierter Lichtimpuls bei einem LIDAR-Sensor stellen beispielsweise Echos im Sinne der vorliegenden Beschreibung dar. LIDAR ist hierbei die Abkürzung des englisch sprachigen Ausdrucks "Laser detection and ranging".

Ein Freibereich ist ein Bereich im Umfeld des Kraftfahrzeugs, in dem sich keine Objekte bzw. Hindernisse befinden. Beispielsweise stellen eine leere Straße oder ein leerer Parkplatz einen solchen Freibereich dar.

Ein Orientierungsattribut ist eine mit einem Objekt oder einem Teil des Objekts verknüpfte Eigenschaft, welche die Orientierung des Objektes oder von Teilen des Objekts beschreibt. Beispielsweise können eine Oberflächenorientierung oder eine Oberflächennormale ein solches Orientierungsattribut darstellen. Einem Objekt können dabei mehrere Orientierungsattribute zugeordnet werden. Unterschiedlichen Stellen oder Positionen der Oberflächenkontur eines Objekts kann vorteilhafterweise jeweils ein Orientierungsattribut zugeordnet sein.

Eine Oberflächenkontur ist eine Umrisslinie eines Objektes, welche das Objekt von seiner Umgebung abgrenzt. Jedem Punkt oder Abschnitt auf der Außenseite der Oberflächenkontur lässt sich dabei eine Oberflächennormale zuordnen. Ein solcher Punkt oder Abschnitt ist somit ein Teil des Objekts.

Ein Anmesswinkel ist der Winkel, unter dem ein vom Sensor ausgesandtes Messsignal auf eine Oberfläche eines im Umfeld positionierten Objektes oder einen Teil des Objekts trifft. Trifft das Messsignal beispielsweise senkrecht auf die Oberfläche, so beträgt der Anmesswinkel definitionsgemäß beispielsweise 0°, verläuft die Ausbreitungsrichtung des Messsignal hingegen parallel zur Oberfläche, so beträgt der Anmesswinkel definitionsgemäß dann 90°.

Ein Vektor der von dem Messsensor zu der vermessenen Position der Oberfläche des Objekts verläuft wird als Anmessvektor bezeichnet.

Die Güte eines Sensors ist ein Wert, der die Qualität des Sensors im Vergleich zu anderen Sensoren gleicher oder unterschiedlicher Art ausdrückt. Beispielsweise kann eine Ortsauflösung eines Sensors eine solche Güte ausdrücken. Hierbei steigt beispielsweise eine Güte eines Sensors mit einer Ortsauflösungsfähigkeit. D. h. je feiner das Umfeld ortsaufgelöst erfasst werden kann, desto höher ist die Güte bezüglich der Ortsauflösung.

Das Schätzen einer Größe umfasst das Ermitteln dieser Größe, auch wenn kein Schätzverfahren verwendet wird.

Der Ausdruck "Erkennen eine eines Objekts" soll ausdrücken, dass für eine Position oder einen Bereich im Umfeld anhand von Messdaten eines Sensors eine Existenz oder Existenzwahrscheinlichkeit für die Existenz eines Hindernisses festgestellt wird. Hierbei ist es unerheblich zu ermitteln, ob so erkannte Objekte zu demselben Gegenstand im Umfeld gehören oder nicht. Zunächst werden somit Objektpositionen ermittelt. Bei einigen Ausführungsformen wird jede so ermittelte Hindernisposition oder Objektposition als ein Objekt aufgefasst. Dieses gilt insbesondere häufig für Ausführungsformen, bei denen die Objektpositionen in einer zellulären Karte abgelegt werden. Einem Bereich des Umfelds ist hierbei eine Zelle der zellulären Karte zugeordnet. Abhängig von der verwendeten Messmethode und einem verwendeten Auswerteverfahren werden bei einigen Ausführungsformen anhand der Messwerte ermittelte Objektpositionen jedoch auch zu einem Objekt zusammengefasst, welches dann in der Karte abgelegt wird. Auch hierbei kann es sich um eine zelluläre Karte handeln. Die Tatsache, dass eine Zusammenfassung von verschiedenen erfassten Objektpositionen, die demselben realen Gegenstand im Umfeld zuzuordnen sind, in der Karte nicht erfolgt ist, und die Objektpositionen somit als einzelne Objekte behandelt werden ist für die Erfindung unbeachtlich. Wesentlich ist nur, dass der Objektposition ein Orientierungsattribut zuordenbar ist. Befindet sich im Umfeld beispielsweise ein Hindernis in Form einer entlang einer Straße gerade verlaufenden und senkrecht zur Fahrbahnoberfläche orientierte flachen Wand, wird man entlang der Ausdehnung an verschiedenen Positionen über eine Laufzeitmessung die Existenz der Wand feststellen können und somit eine Reihe von Objektpositionen ermitteln. Aufgrund des gradlinigen Verlaufs kann man allen diesen Objektpositionen als ein Orientierungsattribut jeweils denselben Normalenvektor zur Wandfläche zuordnen. Ob in der Karte die Objektpositionen als einzelne Objekte mit jeweils einem Orientierungsattribut in Form des Normalenvektors behandelt werden oder in der Karte die Ausdehnung der Wand und Ihre Position gemeinsam mit dem Normalenvektor hinterlegt sind, ist für die Erfindung unerheblich. Wichtig ist es, dass für eine Position, an der eine Objektposition in der Karte hinterlegt ist, ein Orientierungsattribut ermittelt werden kann, wenn ein nachfolgende Messung für diese Position einen Freibereich anzeigt.

In einer Umfeldkarte werden Objekten und/oder Objektpositionen in der Regel Existenzwahrscheinlichkeiten zugeordnet. In einfachen Umfeldkarten gibt es nur die Werte "existent" und "nicht existent", welche beispielsweise über die Zahlen "1" und "0" ausgedrückt werden. Andere Umfeldkarten kennen Abstufungen.

Als Sensorbereich wird der Messbereich eines Sensors bezeichnet. Der Messbereich ist der Bereich der Umgebung, über den eine Messung des Sensors Umfeldinformationen liefert.

### Bevorzugte Ausführungsformen

Erfindungsgemäß wird somit ein Verfahren zur verbesserten Datenfusionierung bei der Umfelderfassung in einem Kraftfahrzeug geschaffen, umfassend die folgenden Schritte: Erfassen eines Umfeldes des Kraftfahrzeugs mit mindestens einem Sensor, Erkennen von Objekten in von dem mindestens einen Sensor erfassten Messdaten, Fusionieren der erkannten Objekte und deren Objektpositionen in einer Umfeldkarte, wobei in der Umfeldkarte hinterlegten Objekten eine Existenzwahrscheinlichkeit zugeordnet wird oder ist, und wobei die Existenzwahrscheinlichkeit eines hinterlegten Objektes reduziert wird, wenn beim Erfassen an der Position des hinterlegten Objektes ein Freibereich gemessen wird, wobei den in der Umfeldkarte hinterlegten Objekten jeweils mindestens ein Orientierungsattribut zugeordnet und in der Umfeldkarte hinterlegt ist, und für einen Bereich im Sensorbereich des mindestens einen Sensors, in dem ein Freibereich gemessen wird, die Existenzwahrscheinlichkeit eines Objektes, welches in dem mit dem Bereich korrespondierenden Bereich in der Umfeldkarte hinterlegt ist, in Abhängigkeit des mindestens einen zugeordneten Orientierungsattributs des hinterlegten Objekts reduziert wird.

Ferner wird erfindungsgemäß eine Vorrichtung zum Ausführen des Verfahrens nach einem der vorangegangenen Ansprüche geschaffen, umfassend: mindestens einen Sensor zum Erfassen eines Umfeldes eines Kraftfahrzeuges, eine Objekterkennungseinrichtung zum Erkennen von Objekten, eine Fusionseinrichtung zum Fusionieren der erkannten Objekte und deren Objektpositionen in einer Umfeldkarte, wobei die Fusionseinrichtung ausgebildet ist, in der Umfeldkarte hinterlegten Objekten eine Existenzwahrscheinlichkeit zuzuordnen und die Existenzwahrscheinlichkeit eines hinterlegten Objektes zu reduzieren, wenn beim Erfassen an der Position des hinterlegten Objektes ein Freibereich gemessen wird, und eine Steuerung, wobei die Fusionseinrichtung eine Artefakterkennungseinrichtung umfasst, wobei die Artefakterkennungseinrichtung ausgebildet ist, den in der Umfeldkarte hinterlegten Objekten mindestens ein Orientierungsattribut zuzuordnen, und für einen Bereich im Sensorbereich des mindestens einen Sensors, in dem ein Freibereich gemessen wird, die Existenzwahrscheinlichkeit eines Objektes, welches in dem mit dem Bereich korrespondierenden Bereich in der Umfeldkarte hinterlegt ist, in Abhängigkeit des mindestens einen zugeordneten Orientierungsattributs zu reduzieren.

Die den einzelnen Objekten zugeordneten Orientierungsattribute können bereits in der Umfeldkarte hinterlegt sein, sie können aber auch auf Grundlage der aktuellen Messungen erst erzeugt werden. In einer vorteilhaften Ausführungsform ist deshalb vorgesehen, dass das Orientierungsattribut auf Grundlage der vom Sensor erfassten Messdaten geschätzt wird. Dies hat den Vorteil, dass selbst wenn neue Objekte, welche noch nicht in der Umfeldkarte hinterlegt sind, erkannt werden, diesen neuen Objekten ebenfalls Orientierungsattribute für die Kartierung zugeordnet werden können. Zum Schätzen können dabei verschiedene Methoden zur Anwendung kommen, beispielsweise Mustererkennungsverfahren, lineare Regressionsmethoden oder auch statistische Verfahren.

Beim Schätzen des Orientierungsattributes kann es von Vorteil sein, nicht nur eine oder wenige Objektpositionen eines Objektes für das Schätzen der Orientierung heranzuziehen, sondern auch benachbarte Objektpositionen mit zu berücksichtigen. Deshalb ist in einer weiteren vorteilhaften Ausführungsform vorgesehen, dass beim Schätzen des Orientierungsattributs benachbarte Objektpositionen mit berücksichtigt werden. Hierbei müssen die benachbarten Objektpositionen nicht demselben Objekt zugeordnet sein. D.h., auch wenn beispielsweise die verzeichneten Objektpositionen in einer Karte als einzelne Objekte aufgefasst werden, können die benachbarten Objektpositionen für das Schätzen des Orientierungsattributs herangezogen werden. Eine Oberflächenkontur in der Umgebung kann von einem Gegenstand oder mehreren nebeneinander angeordneten Gegenständen gebildet sein. Häufig werden jedoch benachbarte erkannte Objekte oder Objektpositionen anhand von Reflexionen an unterschiedlichen Stellen desselben Gegenstands herrühren. Die Oberflächenkontur lässt sich anhand der erkannten Objektpositionen ermitteln unabhängig davon, ob eine Zuordnung der erkannten Objektpositionen zu Objekten korrekt erfolgt ist, die mit realen Gegenständen korrespondieren, oder nicht.

Neben dem Schätzen des Orientierungsattributes für erkannte Objekte in aktuell erfassten Messdaten besteht auch die Möglichkeit, Orientierungsattribute für bereits in der Umfeldkarte hinterlegte Objekte zu schätzen. Deshalb ist in einer vorteilhaften Ausführungsform der Erfindung vorgesehen, dass jeweils mindestens ein Orientierungsattribut zusätzlich oder alternativ auf Grundlage der in der Umfeldkarte hinterlegten Objekte geschätzt wird und das geschätzte Orientierungsattribut den hinterlegten Objekten jeweils zugeordnet wird. Dies kann beispielsweise von Vorteil sein, wenn in Zeiten, in denen Rechenleistung im Kraftfahrzeug zur Verfügung steht oder ansonsten ungenutzt bleibt, für in der Umfeldkarte hinterlegte Objekte Orientierungsattribute bestimmt werden können. Dies kann sich beispielsweise als vorteilhaft bei der Ortsauflösung oder Anzahl der Orientierungsattribute erweisen. In Zeiten, in denen viel Rechenleistung nachgefragt wird, beispielsweise beim Einparken mittels eines Einparkassistenten, kann dann auf die vorher geschätzten Orientierungsattribute zurückgegriffen werden. Dadurch werden Engpässe bei der Rechenleistung vermieden oder zumindest gering gehalten.

Liegen Messdaten von mehreren Sensoren vor, so ist die Güte eines jeden der Sensoren entscheidend für die Qualität der von diesem Sensor erfassten Messdaten. So hat ein Sensor mit einer größeren Ortsauflösung meistens eine größere Qualität als ein Sensor mit einer geringeren Ortsauflösung. Die Qualität kann aber beispielsweise auch von einer aktuellen Umweltsituation, beispielsweise des Wetters, abhängig sein.

So wird ein optisch arbeitender Sensor trotz möglicher höherer Ortauflösung bei Nebel schlechtere Ergebnisse liefern als beispielsweise ein Radarsensor, für den der Nebel vernachlässigbar ist. Deshalb ist in einer besonders vorteilhaften Ausführungsform vorgesehen, dass beim Schätzen des mindestens einen Orientierungsattributs eine Güte des mindestens einen Sensors berücksichtigt wird.

Ebenso vorteilhaft und wünschenswert kann es sein, nicht eine einzelne Messung als Grundlage für das Schätzen des Orientierungsattributes eines erfassten Objektes zu nehmen, sondern mehrere, zeitlich nacheinander erfasste, Messungen zu verwenden. In einer vorteilhaften Ausführungsform ist deshalb vorgesehen, dass mehrere für ein erkanntes und/oder in der Umfeldkarte hinterlegtes Objekt geschätzte Orientierungsattribute zu einem Orientierungsattribut fusioniert werden.

Ist dies nicht möglich, so hat es sich als vorteilhaft erwiesen, stets die letzte Schätzung für das Orientierungsattribut als die aktuell gültige Schätzung anzunehmen. Deshalb ist in diesem Fall vorgesehen, dass für ein erkanntes Objekt nur das Orientierungsattribut in der Umfeldkarte hinterlegt wird, welches zeitlich als letztes geschätzt wurde. Somit steht trotz weniger Messdaten stets ein aktuelles Abbild des Umfeldes des Kraftfahrzeugs zur Verfügung.

Beim Schätzen des Orientierungsattributes kann es vorteilhaft sein, größere, das Objekt in seinen Eigenschaften besser beschreibende, Zusammenhänge mit einzubeziehen. Deshalb ist in einer weiteren vorteilhaften Ausführungsform vorgesehen, dass zu jedem erkannten Objekt eine Oberflächenkontur geschätzt wird und das Orientierungsattribut auf Grundlage der geschätzten Oberflächenkontur geschätzt wird, wobei für jedes erkannte Objekt, zu dem sich keine Oberflächenkontur schätzen lässt, das Orientierungsattribut auf Grundlage eines für dieses Objekt bestimmten Anmesswinkels geschätzt wird. Somit ist stets gewährleistet, dass jedem erkannten Objekt, auch wenn es nur sehr wenige Messdaten zu diesem erkannten Objekt gibt, ein Orientierungsattribut zugeordnet ist oder wird.

Auch hier kann die Qualität der Schätzung verbessert werden, wenn man nicht nur eine einzige, sondern mehrere Messungen in die Schätzung mit einbezieht. Deshalb hat es sich als vorteilhaft erwiesen, eine Ausführungsform zu realisieren, bei der vorgesehen ist, dass die Oberflächenkontur eines erkannten Objektes durch Zusammenfassen mehrerer zeitlich aufeinanderfolgenden Messungen geschätzt wird.

Besonders vorteilhaft ist eine Ausführungsform bei der mehrere Sensoren beim Erfassen des Umfeldes des Kraftfahrzeugs zum Einsatz kommen. Deshalb ist in einer solchen Ausführungsform vorgesehen, dass das Umfeld des Kraftfahrzeugs von mindestens einem weiteren Sensor nach einem anderen Messverfahren erfasst wird, und die erfassten Messdaten beim Schätzen des Orientierungsattributs berücksichtigt werden. Hier kann ebenfalls wieder eine Güte der verwendeten Sensoren bei der Schätzung des Orientierungsattributes berücksichtigt werden. Es ist dann auch vorteilhafterweise möglich, Orientierungsattribute, welche mit Hilfe eines Sensors, der nach einem Messverfahren arbeitet, bestimmt worden sind, beim Fusionieren der Messdaten, welche mit einem anderen Sensor, der nach einem anderen Messverfahren arbeitet, zu berücksichtigen. So kann beispielsweise das Orientierungsattribut eines erkannten Objektes auf Grundlage von Messdaten, welche mittels eines Laserscanners erfasst worden sind, bestimmt werden. Wird das Orientierungsattribut zu diesem erkannten Objekt erfindungsgemäß in der Umfeldkarte hinterlegt, so kann bei einer darauffolgenden Messung, beispielsweise mittels eines Ultraschallsensors, auf das hinterlegte Orientierungsattribut zugegriffen werden.

Als besonders vorteilhaft hat es sich dabei erwiesen, wenn die von dem mindestens einen weiteren Sensor erfassten Messdaten beim Schätzen des Orientierungsattributs gewichtet berücksichtigt werden. Als Parameter, welche bei der Gewichtung berücksichtigt werden können, kommen beispielsweise eine Güte der verwendeten Sensoren oder ein Zeitpunkt der erfassten Messdaten in Frage.

Besonders vorteilhaft hat es sich erwiesen, wenn das Orientierungsattribut eine Oberflächenorientierung ist. Eine solche Oberflächenorientierung erlaubt es besonders gut, das Reflexionsverhalten eines von einem Sensor ausgesandten Impuls an einer zugehörigen Oberfläche abzuschätzen und somit Messartefakte zu identifizieren, welche auf Grund einer größtenteils oder vollständig vom Sensor weg führenden Reflexion entstehen. Insbesondere bei Ultraschallsensoren tritt dieses Problem häufig auf, aber auch bei optischen Sensoren wie Laserscannern oder Radarsensoren tritt dieses Problem auf.

Dabei ist der Vorteil, dass eine Ausführungsform realisiert werden kann, bei der vorgesehen ist, dass der Oberflächenorientierung eine Oberflächennormale zugeordnet wird oder ist. Eine Bestimmung von Oberflächen von erkannten Objekten, welche für das Erfassen eine ungünstige Orientierung aufweisen, ist dann besonders einfach.

In einer besonders vorteilhaften Ausführungsform ist deshalb vorgesehen, dass die Existenzwahrscheinlichkeit des hinterlegten Objektes beim Fusionieren nicht reduziert wird, wenn ein aus einem Anmesswinkel und der Oberflächennormalen gebildeter Differenzwinkel einen Schwellwert überschreitet. Somit kann auf einfache Weise anhand der in der Umfeldkarte hinterlegten Oberflächennormalen abgeschätzt werden, ob es zu einer ungünstigen Reflexion gekommen ist oder nicht. Als Richtwert für ultraschallbasierte Messungen hat sich ein Schwellwert für den Differenzwinkel von etwa 45° als vorteilhaft erwiesen. Für laserscannerbasiertes Erfassen des Umfeldes ist der Schwellwert des Differenzwinkels etwas größer, er liegt hier bei etwa 65° bis 70°.

Die zurückreflektierte Intensität einer Laufzeitmessung, wie es eine Impuls-Echo-Messung ist, hängt neben den Winkelverhältnissen zwischen der Ausbreitungsrichtung des ausgesandten Impulses und der Oberflächenorientierung des Hindernisses auch von der Signalabschwächungen zwischen Messsensor und Hindernis sowie Hindernis und Messsensor nach der Reflexion ab. Selbst bei einem gerichtet ausgesandten Impuls findet in der Regel eine räumliche Aufweitung des ausgesandten Impulses auf, so dass die Intensität pro Reflexionsfläche abnimmt. Zusätzlich treten weitere Abschwächungseffekt auf, die in der Regel eine Abhängigkeit von der zurückgelegten Strecke aufweisen. D.h. der an einem Gegenstand im Umfeld auftreffende Impuls ist hinsichtlich der Intensität bereits abgeschwächt. Nach der Reflexion bleibt häufig ein Bündelungscharakter des Impulses nicht erhalten. Eine Rückreflexion erfolgt häufig in einen breiten Winkelbereich. Dieses geht damit einher, dass mit dem Abstand von dem reflektierenden Hindernis die lokal zu messende Intensität weiter abnimmt. Die erfasste Intensität nimmt somit bei ansonsten gelichbleibenden geometrischen Verhältnissen mit dem Abstand zwischen Sensor und Hindernis oder Objekt ab. Da ungünstige Orientierungen des Hindernisses auch zu einer Reduktion der reflektierten Intensität führen, verstärken sich die beiden Prozesse. Daher sieht eine vorteilhafte Ausführungsform der Erfindung vor, dass der verwendete Schwellwert für eine Winkelgröße, beispielsweise den Differenzwinkel zwischen Anmessvektor und Oberflächenorientierung abhängig von dem ermittelten Abstand der Position des in der Karte hinterlegten Objekts von dem Messsensor ermittelt oder gewählt wird. Beispielsweise kann der Schwellwert für den maximalen Differenzwinkel zwischen Anmessvektor und Oberflächennormal bis zu dem Freibereiche als Freibereiche bei der Fusionierung an einer Objektposition in einer Karte berücksichtigt werden, anhand einer Schwellwertfunktion, die von dem Abstand abhängig ist, ermittelt werden. Bei kleinen Abständen ist der Schwellwert für den Differenzwinkel größer als bei größeren Abständen. Bei ganz geringen Abständen von beispielswiese 25 cm ist beispielsweise bei Ultraschallsensoren eine ausgesandte Impulsintensität so hoch, dass auch von sehr flach gestreiften Objekten (Anmesswinkel gemessen gegen die Oberflächennormale nahe 90°) in der Regel ein Echoimpuls zurückreflektiert wird, der erfassbar ist.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Vorrichtung zur verbesserten Datenfusionierung bei der Umfelderfassung in einem Kraftfahrzeug;
- Fig. 2: eine schematische Darstellung einer weiteren Ausführungsform der Vorrichtung zur verbesserten Datenfusionierung bei der Umfelderfassung in einem Kraftfahrzeug;
- Fig. 3: eine schematische Darstellung von Messdaten eines Umfeldes eines Kraftfahrzeugs;
- Fig. 4a: eine schematische Darstellung von übereinandergelegten Messdaten des Umfeldes des Kraftfahrzeugs und dem korrespondierenden Ausschnitt der Umfeldkarte aus Fig. 3 zu einem späteren Zeitpunkt;
- Fig. 4b: eine schematische Darstellung wie in Fig. 4a, jedoch sind lediglich die Messdaten des Umfeldes des Kraftfahrzeugs dargestellt;
- Fig. 5: eine schematische Darstellung von Messdaten des Umfeldes des Kraftfahrzeugs wie in Fig. 3 zur Erläuterung der Erfindung;
- Fig. 6a: eine schematische Darstellung von Messdaten des Umfeldes des Kraftfahrzeugs wie in Fig. 5 zu einem späteren Zeitpunkt zur Erläuterung der Erfindung;
- Fig. 6b: eine schematische Darstellung von übereinandergelegten Messdaten und in der Umfeldkarte hinterlegten Objekten für die gleiche Situation wie die in Fig. 6a gezeigte zur Erläuterung einer Bestimmung eines Differenzwinkels;
- Fig. 6c: eine schematische Darstellung zur Erläuterung einer Bestimmung eines Differenzwinkels;
- Fig. 7: ein schematisches Ablaufdiagramm des Verfahrens.

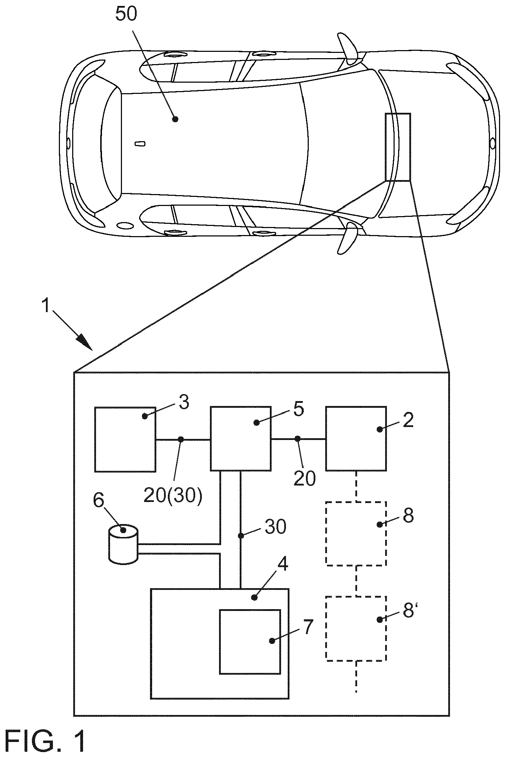

In Fig. 1 ist eine Ausführungsform der Vorrichtung 1 zur verbesserten Datenfusionierung bei der Umfelderfassung in einem Kraftfahrzeug 50 gezeigt. Die Vorrichtung 1 umfasst mindestens einen Sensor 2, eine Objekterkennungseinrichtung 3, eine Fusionseinrichtung 4 und eine Steuerung 5. Die Steuerung 5 kann auf einen Speicher 6, in dem eine Umfeldkarte mit Objekten, Objektpositionen und Orientierungsattributen, hinterlegt ist, zugreifen. Die Fusionseinrichtung 4 umfasst eine Artefakterkennungseinrichtung 7 und kann ebenfalls auf den Speicher 6 zugreifen. Optional umfasst die Vorrichtung 1 weitere Sensoren 8, 8`.

Das erfindungsgemäße Verfahren wird nun wie folgt in der Vorrichtung 1 ausgeführt. Der mindestens eine Sensor 2 erfasst das Umfeld des Kraftfahrzeugs 50. Die vom mindestens einen Sensor 2 erfassten Messdaten 20 werden dann von der Steuerung 5 an die Objekterkennungseinrichtung 3 weitergeleitet. Die Objekterkennungseinrichtung 3 erkennt in den Messdaten 20 Objekte und zu den erkannten Objekten gehörige Objektpositionen. Ebenfalls erkennt die Objekterkennungseinrichtung 3 Freibereiche, in denen sich keinerlei Objekte befinden. Die Objekte, die Objektpositionen und die Positionen der Freibereiche werden als Daten 30 über die Steuerung 5 weiter an die Artefakterkennungseinrichtung 4 geleitet. Die Artefakterkennungseinrichtung 4 überprüft anschließend, ob an Positionen der Freibereiche Objekte in der Umfeldkarte hinterlegt sind. Dazu führt die Artefakterkennungseinrichtung 4 eine entsprechende Abfrage im Speicher 6 durch. Ist ein Objekt hinterlegt, so ruft die Artefakterkennungseinrichtung 4 das zu diesem Objekt hinterlegte Orientierungsattribut ab. Beispielsweise kann ein solches Orientierungsattribut eine Oberflächennormale des erkannten Objektes sein. Nach dem Abrufen schätzt die Artefakterkennungseinrichtung 4 einen Anmesswinkel des mindestens einen Sensors 2 zum erkannten Objekt und bestimmt aus dem geschätzten Anmesswinkel und der abgerufenen mindestens einen Oberflächennormalen einen Differenzwinkel. Überschreitet der bestimmte Differenzwinkel einen Schwellenwert, der beispielsweise von dem verwendeten mindestens einen Sensor abhängig ist, so werden die Messdaten, die zum Freibereich gehören, bei der Datenfusion nicht mit berücksichtigt. Die erkannten Objekte und deren Objektpositionen werden hingegen durch Fusionieren mit den bereits hinterlegten Objekten in der Umfeldkarte hinterlegt.

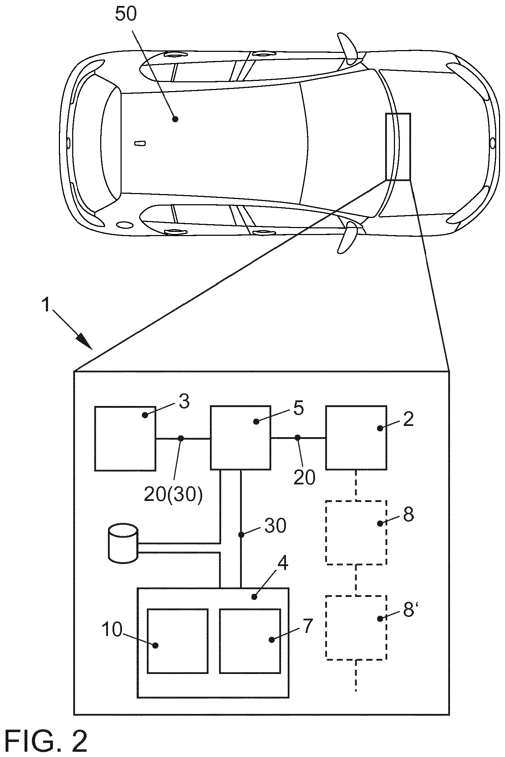

In Fig. 2 ist schematisch eine weitere Ausführungsform der Vorrichtung 1 gezeigt. Sie entspricht zum Großteil der Ausführungsform, welche in Fig. 1 gezeigt ist. Gleiche Bezugszeichen bezeichnen dabei gleiche Merkmale. Die Artefakterkennungseinrichtung 4 umfasst jedoch zusätzlich eine Schätzeinrichtung 10.

Die Schätzeinrichtung 10 führt an erkannten Objekten in den Daten 30, welche der Artefakterkennungseinrichtung 4 von der Steuerung 5 zugeleitet wurden, Schätzungen über jeweils mindestens ein Orientierungsattribut durch. Beispielsweise sei hier wieder eine Oberflächennormale als Orientierungsattribut angenommen. Zu jedem erkannten Objekt schätzt die Schätzeinrichtung 10 mindestens eine Oberflächennormale, beispielsweise, indem erst eine Oberflächenkontur des erkannten Objektes geschätzt wird, und anschließend zu dieser Oberflächenkontur mindestens eine Oberflächennormale geschätzt wird. In der Regel haben die geschätzten Oberflächenkonturen, die ausgedehnt sind, an unterschiedlichen Positionen unterschiedliche Oberflächennormale. Einem Objekt oder einer Oberflächenkontur können daher mehrere Oberflächenmomente zugeordnet sein. Die Zuordnung ist positionsabhängig. Alternativ oder zusätzlich können entsprechende Oberflächenkonturen und Oberflächennormale auch für in der Umfeldkarte hinterlegte Objekte geschätzt werden. Die geschätzten Oberflächennormalen werden dann den erkannten Objekten zugeordnet und zusammen mit diesen in der Umfeldkarte verknüpft und im Speicher 6 abgelegt. Auf diese Weise können sie zum späteren Erkennen von Messartefakten vorgehalten und wieder abgerufen werden.

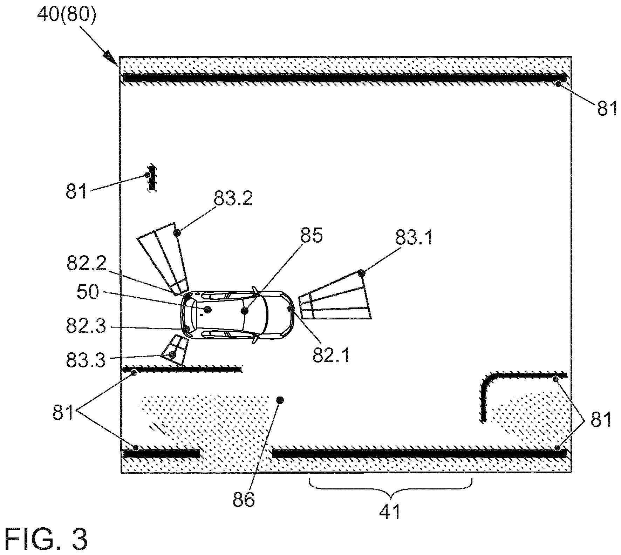

Fig. 3 zeigt ein typisches Umfeld 40 eines Kraftfahrzeugs 50 beim Anfahren einer Parklücke 41. Die Darstellung basiert auf experimentell erfassten Messdaten. Das Kraftfahrzeug 50 nähert sich dabei einer Parklücke 41 und erfasst das Umfeld 40 mittels eines Laserscanners 85 und mehreren Ultraschallsensoren 82.1, 82.2, 82.3. Die Ultraschallsensoren 82.1, 82.2, 82.3 weisen dabei jeweils einen Sensorbereich 83.1, 83.2, 83.3 auf, den sie aktuell vermessen. Im Vergleich zu den Ultraschallsensoren 82.1, 82.2, 82.3 weist der Laserscanner 85 eine größere Reichweite auf. Aus den vom Laserscanner 85 und den Ultraschallsensoren 82.1, 82.2, 82.3 erfassten Messdaten des Umfelds 40 wird eine Umfeldkarte 80 erstellt, in der Objekte 81 und Freibereiche 86 hinterlegt sind. Weiterhin gibt es auch Bereiche, welche vom Sensor als nicht zugänglich erkannt worden sind, da sie in den Schatten eines erkannten Objektes fallen. Diese Bereiche sind in Fig. 3 als leichte Schraffur dargestellt. Die Freibereiche 86 enthalten keine Schraffur. Bei darauf folgenden Messungen werden die Messdaten der aktuellen Messung mit den Messdaten der bereits in der Umfeldkarte 80 hinterlegten Messungen durch Ausführen des erfindungsgemäßen Verfahrens fusioniert.

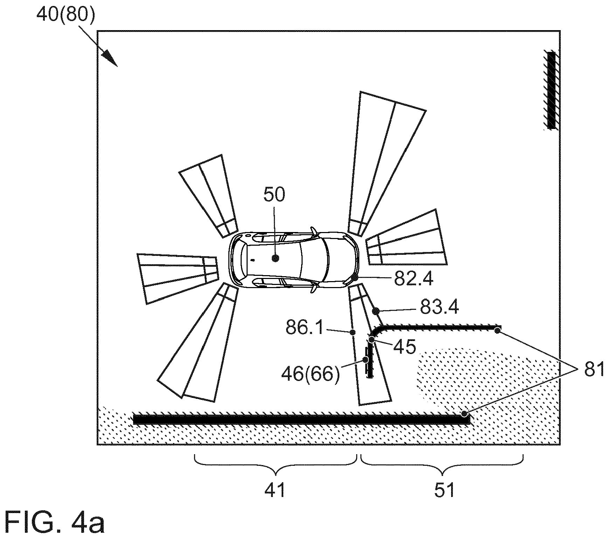

In Fig. 4a ist das gleiche Umfeld 40 bzw. die gleiche Umfeldkarte 80 zu einem späteren Zeitpunkt gezeigt. Dabei sind aktuell erfasste Messdaten und die in der Umfeldkarte 80 hinterlegten Objekte 81 übereinander gelegt dargestellt. Das Kraftfahrzeug 50 hat eine Wegstrecke in der Zeitspanne bis zum späteren Zeitpunkt zurückgelegt und befindet sich zu dem späteren Zeitpunkt direkt parallel neben der Parklücke 41.

Der vordere rechte Ultraschallsensor 82.4 des Kraftfahrzeugs 50 erfasst jetzt einen Sensorbereich 83.4, in dem sich eine Rückseite 45 eines parkenden Kraftfahrzeugs 51 befindet. Die Kontur 46 der Oberfläche der Rückseite 45 des parkenden Kraftfahrzeugs 51 ist teilweise so orientiert bzw. weist eine solche Oberflächenorientierung 66 auf, dass das vom Ultraschallsensor ausgesandte Messsignal 71 in einem sehr spitzen Winkel auf die Oberfläche trifft. Da von diesem Teil nur eine sehr geringe oder überhaupt keine Leistung reflektiert wird, erscheint dieser Bereich bei einer Messung irrtümlicherweise als Freibereich 86.1.

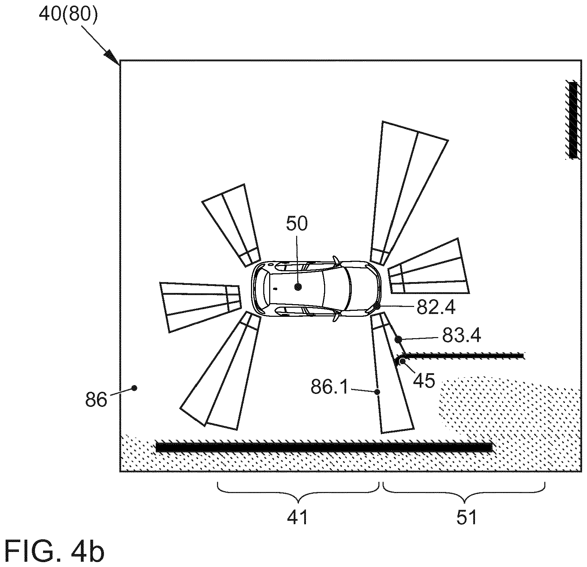

Fig. 4b zeigt die gleiche Situation wie Fig. 4a, es sind jedoch lediglich die aktuellen Messdaten dargestellt. Man erkennt deutlich den von dem vorderen rechten Ultraschallsensor 82.4 gemessenen Freibereich 86.1, der auf Grund der in Fig. 4a dargestellten Kontur 46 der Rückseite 45 des parkenden Kraftfahrzeugs 51 und der dadurch hervorgerufenen Reflexionsrichtung entsteht.

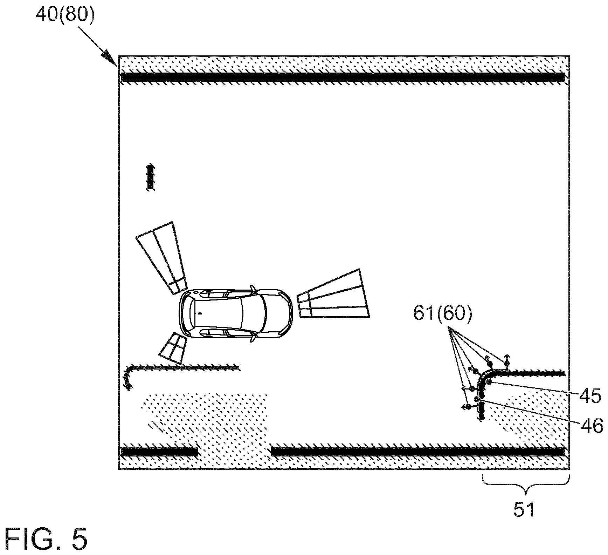

Fig. 5 zeigt die gleiche Situation im Umfeld 40 des Kraftfahrzeugs 50 wie in Fig. 3. Gleiche Bezugszeichen bezeichnen dabei gleiche Gegenstände. Um die in Fig. 4b geschilderten Probleme zu lösen, wird der Kontur 46 der Rückseite 45 des parkenden Kraftfahrzeugs 51 im erfindungsgemäßen Verfahren mindestens ein Orientierungsattribut 60 zugeordnet. Hier sind dem erkannten Objekt Rückseite 45 des Kraftfahrzeugs 51 mehrere Orientierungsattribute zugeordnet, welche jeweils als an der Kontur 46 aufgereihte in unterschiedliche Richtungen weisende Oberflächennormale 61 ausgebildet sind. Die Oberflächennormalen 61 werden beispielsweise über ein Auswerten der Kontur 46 geschätzt.

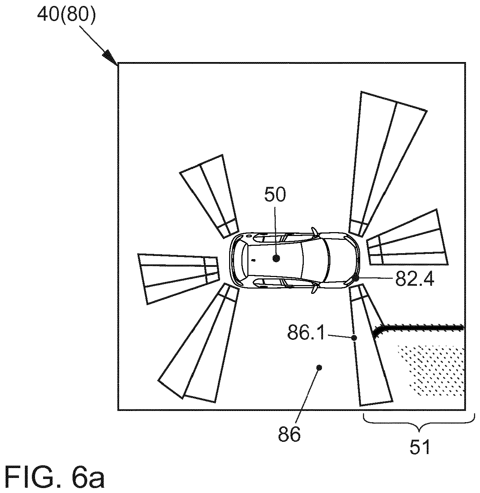

In Fig. 6a ist die gleiche Situation wie in Fig. 4b gezeigt. Der rechte vordere Ultraschallsensor des Kraftfahrzeugs 50 misst einen Freibereich 86.1. Da der Freibereich 86.1 gemessen wurde, wird nun überprüft, ob ein Objekt 81 für den gleichen Bereich in der Karte hinterlegt ist.

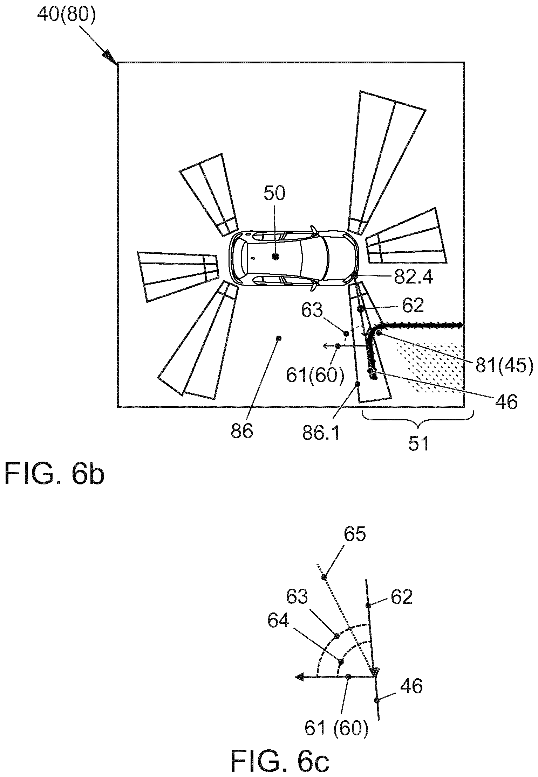

Hier ergibt die Überprüfung, dass in der Karte ein Objekt 81 hinterlegt ist, das zur Rückseite 45 des parkenden Kraftfahrzeugs 51 gehört. Dies ist schematisch in Fig. 6b dargestellt, in der sowohl die aktuell erfassten Messdaten als auch die in der Umfeldkarte 80 hinterlegten Objekte 81 übereinandergelegt dargestellt sind. Anschließend wird ein Anmesswinkel 64 (siehe dazu auch Fig. 6c) oder Anmessvektor 62 zu dem hinterlegten Objekt bezüglich der aktuellen Position des Kraftfahrzeugs 50 bzw. des rechten Ultraschallsensors 82.4 in der Umfeldkarte 80 bestimmt. Das zu dem hinterlegten Objekt 81 mindestens eine hinterlegte Orientierungsattribut 60, hier die Oberflächennormale 61, wird aus der Umfeldkarte 80 abgefragt.

Aus dem Anmesswinkel 64 oder dem Anmessvektor 62 und der Oberflächennormalen 61 wird ein Differenzwinkel 63 bestimmt. Überschreitet der Differenzwinkel 63 einen Schwellwert 65, so werden die erfassten Messdaten, die einen Freibereich an der Position des hinterlegten Objekts 81 anzeigen, verworfen und bei einem Fusionieren der aktuellen Daten mit bereits in der Umfeldkarte 80 hinterlegten Daten nicht berücksichtigt, denn sie beruhen lediglich auf einem Messartefakt. Die der Rückseite 45 des parkenden Kraftfahrzeugs 51 zugeordnete Existenzwahrscheinlichkeit wird folglich nicht verändert.

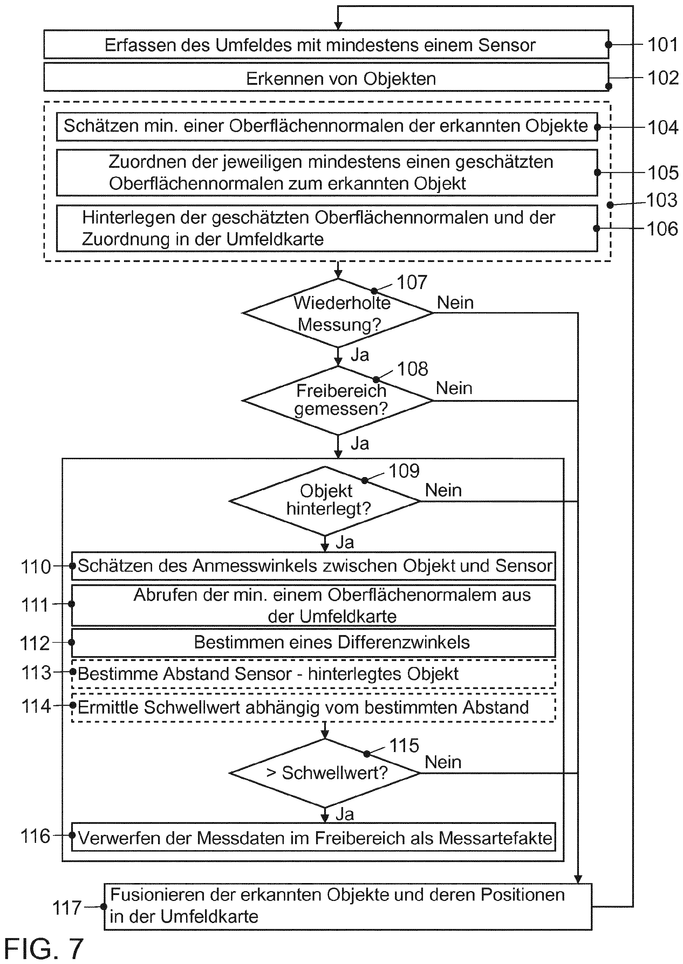

Fig. 7 zeigt ein schematisches Ablaufdiagramm des Verfahrens zur verbesserten Datenfusionierung bei einer Umfelderfassung. In einem ersten Verfahrensschritt wird mit mindestens einem Sensor ein Umfeld des Kraftfahrzeugs erfasst 101. Anschließend werden in den erfassten Messdaten Objekte erkannt 102. Optional kann nun an den erkannten Objekten jeweils mindestens ein Orientierungsattribut geschätzt werden 103. Besonders vorteilhaft ist dabei das Schätzen mindestens einer Oberflächennormalen als Orientierungsattribut. Werden bei einer Messung nur einzelne Objektpositionen im Umfeld bestimmt oder ist aus anderen Gründen ein Ermitteln eine Oberflächenkontur nicht möglich, so wird bei einer Ausführungsform für jede ermittelte Objektposition das Orientierungsattribut mithilfe des Anmessvektors (vergl. Fig. 6c) geschätzt. Es wird angenommen, dass die Reflexion des Messsignals, anhand dessen die Objektposition ermittelt wurde, kollineare zu der Oberflächennormale der Oberfläche des an der ermittelten Position befindlichen Objekts erfolgte. D.h., das Orientierungsattribut ist ein Normalenvektor, der kollinear und entgegengesetzt orientiert zu dem zu dem Anmessvektor von dem Messsensor zu der ermittelten Objektposition ist. Ist das Orientierungsattribut geschätzt 104, so wird es dem jeweiligen erkannten Objekt zugeordnet 105 und anschließend mit der Zuordnung in der Umfeldkarte hinterlegt 106. Bei einem wiederholten Erfassen 107 des gleichen Bereiches in dem Umfeld wird abgefragt, ob in einem gemessenen Bereich ein Freibereich gemessen wurde 108. Wurde ein Freibereich gemessen, so folgen die Verfahrensschritte 109 bis 114. Dabei wird zuerst überprüft, ob für den Bereich, in dem der Freibereich gemessen wurde, ein Objekt in der Umfeldkarte hinterlegt ist 109. Ist ein Objekt hinterlegt, so wird ein Anmesswinkel des mindestens einen Sensors zum hinterlegten Objekt geschätzt 110. Zu dem hinterlegten Objekt wird die hinterlegte Oberflächennormale aus der Umfeldkarte abgerufen 111. Aus dem Anmesswinkel und der hinterlegten Oberflächennormalen wird ein Differenzwinkel bestimmt 112. Anschließend wird geprüft 115, ob der Differenzwinkel einen Schwellwert überschreitet. Bei einer Ausführungsform wird der Schwellwert abhängig vom Abstand gewählt. Dieses bedeutet, dass der Abstand des erkannten und in der Karte hinterlegten Objekts, oder genauer der Abstand von der in der Karte hinterlegten Objektposition vom Sensor bestimmt wird 113 und dann anhand des bestimmten Abstands der Schwellwert ermittelt wird 114. Dieses erfolgt in einigen Ausführungsformen anhand einer Nachschlagetabelle in der zu Abständen oder Abstandsbereichen Schwellwerte hinterlegt sind. Bei anderen Ausführungsformen wird der Schwellwert mittels einer Funktion, die von dem bestimmten Abstand abhängig ist, errechnet. Ergibt der Vergleich von Differenzwinkel und Schwellwert, dass der Schwellwert überschritten ist, so werden die erfassten Messdaten für den Bereich als Messartefakte verworfen 116, sie werden bei der am Schluss des Verfahrens durchgeführten Datenfusionierung 117 nicht mit berücksichtigt. Werden reale Freibereiche gemessen bzw. Objekte in den erfassten Messdaten erkannt, so werden sie mit den bereits hinterlegten Objekten und Freibereichen in der Umfeldkarte fusioniert 117. Anschließend wird das Verfahren von vorne durchgeführt.

### Bezugszeichenliste

- 1: Vorrichtung
- 2: Sensor
- 3: Objekterkennungseinrichtung
- 4: Fusionseinrichtung
- 5: Steuerung
- 6: Speicher
- 7: Artefakterkennungseinrichtung
- 8, 8`: weitere Sensoren
- 10: Schätzeinrichtung
- 20: Messdaten
- 30: Daten
- 40: Umfeld
- 41: Parklücke
- 45: Rückseite
- 46: Kontur
- 50: Kraftfahrzeug
- 51: parkendes Kraftfahrzeug
- 60: Orientierungsattribut
- 61: Oberflächennormale
- 62: Anmessvektor
- 63: Differenzwinkel
- 64: Anmesswinkel
- 65: Schwellwert
- 66: Oberflächenorientierung
- 80: Umfeldkarte
- 81: Objekt
- 82.1: Ultraschallsensor
- 82.2: Ultraschallsensor
- 82.3: Ultraschallsensor
- 82.4: vorderer rechter Ultraschallsensor
- 83.1: Sensorbereich
- 83.2: Sensorbereich
- 83.3: Sensorbereich
- 85: Laserscanner
- 86: Freibereich
- 86.1: Freibereich
- 101-117: Verfahrensschritte

## Patentansprüche

1. Verfahren zur verbesserten Datenfusionierung bei der Umfelderfassung in einem Kraftfahrzeug (50), umfassend die folgenden Schritte:
a) Erfassen (101) eines Umfeldes (40) des Kraftfahrzeugs (50) mit mindestens einem Sensor (2),
b) Erkennen (102) von Objekten (81) in von dem mindestens einen Sensor (2) erfassten Messdaten (20),
c) Fusionieren (115) der erkannten Objekte (81) und deren Objektpositionen in einer Umfeldkarte (80), wobei in der Umfeldkarte (80) hinterlegten Objekten (81) eine Existenzwahrscheinlichkeit zugeordnet wird oder ist, und wobei die Existenzwahrscheinlichkeit eines hinterlegten Objektes (81) reduziert wird, wenn beim Erfassen an der Position des hinterlegten Objektes ein Freibereich (86, 86.1) gemessen wird,
**dadurch gekennzeichnet,**
**dass** den in der Umfeldkarte (80) hinterlegten Objekten (81) jeweils mindestens ein Orientierungsattribut (60) zugeordnet und in der Umfeldkarte (80) hinterlegt ist, und für einen Bereich im Sensorbereich (83.1, 83.2, 83.3) des mindestens einen Sensors (2), in dem ein Freibereich (86, 86.1) gemessen wird, die Existenzwahrscheinlichkeit eines Objektes (81), welches in dem mit dem Bereich korrespondierenden Bereich in der Umfeldkarte (80) hinterlegt ist, in Abhängigkeit des zugeordneten Orientierungsattributs (60) reduziert wird.

2. Verfahren nach Anspruch 1, **dadurch gekennzeichnet,**
**dass** das mindestens eine Orientierungsattribut (60) auf Grundlage der vom mindestens einen Sensor (2) erfassten Messdaten (20) geschätzt wird.

3. Verfahren nach Anspruch 2, **dadurch gekennzeichnet,**
**dass** beim Schätzen des mindestens einen Orientierungsattributs (60) benachbarte Objektpositionen mit berücksichtigt werden.

4. Verfahren nach einem der Ansprüche 1 bis 3, **dadurch gekennzeichnet,**
**dass** jeweils mindestens ein Orientierungsattribut (60) zusätzlich oder alternativ auf Grundlage der in der Umfeldkarte (80) hinterlegten Objekte (81) geschätzt wird und das geschätzte Orientierungsattribut (60) den hinterlegten Objekten (81) jeweils zugeordnet wird.

5. Verfahren nach einem der Ansprüche 2 bis 4, **dadurch gekennzeichnet,**
**dass** beim Schätzen des mindestens einen Orientierungsattributs (60) eine Güte des mindestens einen Sensors (2) berücksichtigt wird.

6. Verfahren nach einem der Ansprüche 2 bis 5, **dadurch gekennzeichnet,**
**dass** mehrere für ein erkanntes und/oder in der Umfeldkarte (80) hinterlegtes Objekt (81) geschätzte Orientierungsattribute (60) zu einem Orientierungsattribut (60) fusioniert werden.

7. Verfahren nach einem der Ansprüche 2 bis 6, **dadurch gekennzeichnet,**
**dass** für ein erkanntes Objekt (81) nur das Orientierungsattribut (60) in der Umfeldkarte (80) hinterlegt wird, welches zeitlich als letztes geschätzt wurde.

8. Verfahren nach einem der vorangegangenen Ansprüche, **dadurch gekennzeichnet, dass** zu jedem erkannten Objekt (81) eine Oberflächenkontur (46) geschätzt wird und das mindestens eine Orientierungsattributs (60) auf Grundlage der geschätzten Oberflächenkontur (46) geschätzt wird,
wobei für jedes erkannte Objekt (81), zu dem sich keine Oberflächenkontur (46) schätzen lässt, das Orientierungsattribut (60) auf Grundlage eines für dieses Objekt (81) bestimmten Anmesswinkels (64) geschätzt wird.

9. Verfahren nach Anspruch 8, **dadurch gekennzeichnet,**
**dass** die Oberflächenkontur (46) eines erkannten Objektes (81) durch Zusammenfassen mehrerer zeitlich aufeinanderfolgenden Messungen geschätzt wird.

10. Verfahren nach einem der Ansprüche 2 bis 9, **dadurch gekennzeichnet,**
**dass** das Umfeld (40) des Kraftfahrzeugs (50) von mindestens einem weiteren Sensor (8, 8') nach einem anderen Messverfahren erfasst wird, und die erfassten Messdaten (20) beim Schätzen des mindestens einen Orientierungsattributs (60) berücksichtigt werden.

11. Verfahren nach Anspruch 10, **dadurch gekennzeichnet,**
**dass** die von dem mindestens einen weiteren Sensor (8, 8') erfassten Messdaten (20) beim Schätzen des mindestens einen Orientierungsattributs (60) gewichtet berücksichtigt werden.

12. Verfahren nach einem der vorangegangenen Ansprüche, **dadurch gekennzeichnet, dass** das mindestens eine Orientierungsattribut (60) eine Oberflächenorientierung (66) ist.

13. Verfahren nach einem der vorangegangenen Ansprüche, **dadurch gekennzeichnet, dass** der Oberflächenorientierung (66) eine Oberflächennormale (61) zugeordnet wird oder ist.

14. Verfahren nach Anspruch 13, **dadurch gekennzeichnet,**
**dass** die Existenzwahrscheinlichkeit des hinterlegten Objektes (81) beim Fusionieren nicht reduziert wird, wenn ein aus einem Anmesswinkel (64) und der Oberflächennormalen (61) gebildeter Differenzwinkel (63) einen Schwellwert (64) überschreitet.

15. Verfahren nach Anspruch 14, **dadurch gekennzeichnet,**
**dass** ein Abstand des Messsensor von der Position in dem Freibereich bestimmt wird, an der in der Umfeldkarte (80) das Objekt (81) hinterlegt ist, und der Schwellwert abhängig von dem bestimmten Abstand ermittelt wird.

16. Verfahren nach einem der vorangegangenen Ansprüche, **dadurch gekennzeichnet, dass** die erkannten Objekte (81) mit Positionen eines globalen Koordinatensystems verknüpft werden.

17. Vorrichtung (1) zum Ausführen des Verfahrens nach einem der vorangegangenen Ansprüche, umfassend:
mindestens einen Sensor (2) zum Erfassen eines Umfeldes (40) eines Kraftfahrzeuges (50),
eine Objekterkennungseinrichtung (3) zum Erkennen von Objekten (81),
eine Fusionseinrichtung (4) zum Fusionieren der erkannten Objekte (81) und deren Objektpositionen in einer Umfeldkarte (80), wobei die Fusionseinrichtung (4) ausgebildet ist, in der Umfeldkarte (80) hinterlegten Objekten (81) eine Existenzwahrscheinlichkeit zuzuordnen und die Existenzwahrscheinlichkeit eines hinterlegten Objektes (81) zu reduzieren, wenn beim Erfassen an der Position des hinterlegten Objektes (81) ein Freibereich (86, 86.1) gemessen wird, und eine Steuerung (5),
**dadurch gekennzeichnet;**
**dass** die Fusionseinrichtung (4) eine Artefakterkennungseinrichtung (7) umfasst, wobei die Artefakterkennungseinrichtung (7) ausgebildet ist, den in der Umfeldkarte (80) hinterlegten Objekten (81) ein Orientierungsattribut (60) zuzuordnen, und
für einen Bereich im Sensorbereich (83.1, 83.2, 83.3) des mindestens einen Sensors (2), in dem ein Freibereich (86, 86.1) gemessen wird, die Existenzwahrscheinlichkeit eines Objektes (81), welches in dem mit dem Bereich korrespondierenden Bereich in der Umfeldkarte (80) hinterlegt ist, in Abhängigkeit des zugeordneten Orientierungsattributs (60) zu reduzieren.

## Claims

1. A method for improved data fusion in environmental detection in a motor vehicle (50), comprising the following steps:
a) detecting (101) an environment (40) of the motor vehicle (50) by means of at least one sensor (2),
b) recognizing (102) objects (81) in measurement data (20) acquired by the at least one sensor (2),
c) fusing (115) the recognized objects (81) and their object positions in an environment map (80), objects (81) stored in the environment map (80) being assigned a probability of existence, and the probability of existence of a stored object (81) being reduced if a free area (86, 86.1) is measured at the position of the stored object during detection,
**characterized in that**
at least one orientation attribute (60) is assigned to each of the objects (81) stored in the environment map (80) and is stored in the environment map (80), and for an area in the sensor area (83.1, 83.2, 83.3) of the at least one sensor (2), in which a free area (86, 86.1) is measured, the probability of existence of an object (81), which is stored in the area in the environment map (80) that corresponds to the area, is reduced according to the assigned orientation attribute (60).

2. The method according to claim 1, **characterized in that**
the at least one orientation attribute (60) is estimated on the basis of the measurement data (20) acquired by the at least one sensor (2).

3. The method according to claim 2, **characterized in that**
neighboring object positions are also taken into account when estimating the at least one orientation attribute (60).

4. The method according to any of claims 1 to 3, **characterized in that**
in each case at least one orientation attribute (60) is additionally or alternatively estimated on the basis of the objects (81) stored in the environment map (80) and the estimated orientation attribute (60) is assigned to the stored objects (81) in each case.

5. The method according to any of claims 2 to 4, **characterized in that**
a quality of the at least one sensor (2) is taken into account when estimating the at least one orientation attribute (60).

6. The method according to any of claims 2 to 5, **characterized in that**
a plurality of orientation attributes (60) estimated for an object (81) recognized and/or stored in the environment map (80) are fused to form an orientation attribute (60).

7. The method according to any of claims 2 to 6, **characterized in that**
for a recognized object (81) only the orientation attribute (60) which was estimated last in terms of time is stored in the environment map (80).

8. The method according to any of the preceding claims,
**characterized in that**
a surface contour (46) is estimated for each recognized object (81) and the at least one orientation attribute (60) is estimated on the basis of the estimated surface contour (46),
wherein for each recognized object (81) for which no surface contour (46) can be estimated, the orientation attribute (60) is estimated on the basis of a measurement angle (64) determined for this object (81).

9. The method according to claim 8, **characterized in that**
the surface contour (46) of a recognized object (81) is estimated by combining a plurality of consecutive measurements.

10. The method according to any of claims 2 to 9, **characterized in that**
the environment (40) of the motor vehicle (50) is detected by at least one further sensor (8, 8') according to a different measurement method, and the acquired measurement data (20) are taken into account when estimating the at least one orientation attribute (60).

11. The method according to claim 10, **characterized in that**
the measurement data (20) acquired by the at least one further sensor (8, 8') are taken into account in a weighted manner when estimating the at least one orientation attribute (60).

12. The method according to any of the preceding claims,
**characterized in that**
the at least one orientation attribute (60) is a surface orientation (66).

13. The method according to any of the preceding claims,
**characterized in that**
a surface normal (61) is assigned to the surface orientation (66).

14. The method according to claim 13, **characterized in that**
the probability of existence of the stored object (81) is not reduced during fusion if a difference angle (63) formed from a measurement angle (64) and the surface normal (61) exceeds a threshold value (64).

15. The method according to claim 14, **characterized in that**
a distance of the measurement sensor from the position in the free area at which the object (81) is stored in the environment map (80) is determined, and the threshold value is ascertained according to the determined distance.

16. The method according to any of the preceding claims,
**characterized in that**
the recognized objects (81) are linked to positions of a global coordinate system.

17. A device (1) for carrying out the method according to any of the preceding claims, comprising:
at least one sensor (2) for detecting an environment (40) of a motor vehicle (50),
an object recognition apparatus (3) for recognizing objects (81),
a fusion apparatus (4) for fusing the recognized objects (81) and their object positions in an environment map (80), the fusion apparatus (4) being designed to assign a probability of existence to objects (81) stored in the environment map (80) and to reduce the probability of existence of a stored object (81) if a free area (86, 86.1) is measured at the position of the stored object (81) during detection, and
a controller (5),
**characterized in that**
the fusion apparatus (4) comprises an artifact recognition apparatus (7), the artifact recognition apparatus (7) being designed to assign an orientation attribute (60) to the objects (81) stored in the environment map (80), and
for an area in the sensor area (83.1, 83.2, 83.3) of the at least one sensor (2), in which a free area (86, 86.1) is measured, to reduce the probability of existence of an object (81), which is stored in the area in the environment map (80) that corresponds to the area, according to the assigned orientation attribute (60).

## Revendications

1. Procédé permettant une fusion améliorée de données lors de la détection d'environnement dans un véhicule automobile (50), comprenant les étapes suivantes :
a) la détection (101) d'un environnement (40) du véhicule automobile (50) avec au moins un capteur (2),
b) la reconnaissance (102) d'objets (81) dans des données de mesure (20) détectées par l'au moins un capteur (2),
c) la fusion (115) des objets (81) reconnus et de leurs positions d'objet dans une carte d'environnement (80), dans lequel, dans la carte d'environnement (80), une probabilité d'existence est ou sera attribuée aux objets (81) déposés et dans lequel la probabilité d'existence d'un objet (81) déposé est réduite, lorsque, lors de la détection, un secteur libre (86, 86.1) est mesuré au niveau de la position de l'objet déposé,
**caractérisé en ce qu'**
au moins un attribut d'orientation (60) est attribué respectivement aux objets (81) déposés dans la carte d'environnement (80) et est déposé dans la carte d'environnement (80) et, pour un secteur dans le secteur de capteur (83.1, 83.2, 83.3) de l'au moins un capteur (2), dans lequel un secteur libre (86, 86.1) est mesuré, la probabilité d'existence d'un objet (81), qui est déposé dans le secteur dans la carte d'environnement (80) correspondant au secteur, est réduite en fonction de l'attribut d'orientation (60) attribué.

2. Procédé selon la revendication 1, **caractérisé en ce que**
l'au moins un attribut d'orientation (60) est estimé sur la base des données de mesure (20) détectées par l'au moins un capteur (2).

3. Procédé selon la revendication 2, **caractérisé en ce que**
lors de l'estimation de l'au moins un attribut d'orientation (60) des positions d'objet voisines sont également prises en compte.

4. Procédé selon l'une des revendications 1 à 3, **caractérisé en ce que**
respectivement au moins un attribut d'orientation (60) est estimé en complément ou en variante sur la base des objets (81) déposés dans la carte d'environnement (80) et l'attribut d'orientation (60) estimé est attribué respectivement aux objets (81) déposés.

5. Procédé selon l'une des revendications 2 à 4, **caractérisé en ce que**
lors de l'estimation de l'au moins un attribut d'orientation (60), une qualité de l'au moins un capteur (2) est prise en compte.

6. Procédé selon l'une des revendications 2 à 5, **caractérisé en ce que**
plusieurs attributs d'orientation (60) estimés pour un objet (81) reconnu et/ou déposé dans la carte d'environnement (80) sont fusionnés en un attribut d'orientation (60).

7. Procédé selon l'une des revendications 2 à 6, **caractérisé en ce que**
pour un objet (81) reconnu, seul l'attribut d'orientation (60), qui a été estimé en dernier dans le temps, est déposé dans la carte d'environnement (80).

8. Procédé selon l'une des revendications précédentes,
**caractérisé en ce qu'**
un contour de surface (46) est estimé pour chaque objet (81) reconnu et l'au moins un attribut d'orientation (60) est estimé sur la base du contour de surface (46) estimé,
dans lequel pour chaque objet (81) reconnu, pour lequel aucun contour de surface (46) ne peut être estimé, l'attribut d'orientation (60) est estimé sur la base d'un angle de mesure (64) déterminé pour cet objet (81).

9. Procédé selon la revendication 8, **caractérisé en ce que**
le contour de surface (46) d'un objet (81) reconnu est estimé par combinaison de plusieurs mesures successives dans le temps.

10. Procédé selon l'une des revendications 2 à 9, **caractérisé en ce que**
l'environnement (40) du véhicule automobile (50) est détecté par au moins un autre capteur (8, 8') selon un autre procédé de mesure et les données de mesure (20) détectées sont prises en compte lors de l'estimation de l'au moins un attribut d'orientation (60).

11. Procédé selon la revendication 10, **caractérisé en ce que**
les données de mesure (20) détectées par l'au moins un autre capteur (8, 8') sont prises en compte de manière pondérée lors de l'estimation de l'au moins un attribut d'orientation (60).

12. Procédé selon l'une des revendications précédentes,
**caractérisé en ce que**
l'au moins un attribut d'orientation (60) est une orientation de surface (66).

13. Procédé selon l'une des revendications précédentes,
**caractérisé en ce qu'**
une normale de surface (61) est ou sera attribuée à l'orientation de surface (66).

14. Procédé selon la revendication 13, **caractérisé en ce que**
la probabilité d'existence de l'objet (81) déposé n'est pas réduite lors de la fusion lorsqu'un angle de différence (63) formé à partir d'un angle de mesure (64) et de la normale de surface (61) dépasse une valeur seuil (64).

15. Procédé selon la revendication 14, **caractérisé en ce qu'**
une distance du capteur de mesure par rapport à la position dans le secteur libre, au niveau de laquelle l'objet (81) est déposé dans la carte d'environnement (80) est déterminée et la valeur seuil est évaluée en fonction de la distance déterminée.

16. Procédé selon l'une des revendications précédentes,
**caractérisé en ce que**
les objets (81) reconnus sont reliés à des positions d'un système de coordonnées mondial.

17. Dispositif (1) permettant de réaliser le procédé selon l'une des revendications précédentes, comprenant :
au moins un capteur (2) pour la détection d'un environnement (40) d'un véhicule automobile (50),
un dispositif de reconnaissance d'objets (3) pour la reconnaissance d'objets (81),
un dispositif de fusion (4) pour la fusion des objets (81) reconnus et de leurs positions d'objet dans une carte d'environnement (80), dans lequel le dispositif de fusion (4) est conçu pour attribuer une probabilité d'existence aux objets (81) déposés dans la carte d'environnement (80) et pour réduire la probabilité d'existence d'un objet (81) déposé, lorsque, lors de la détection, un secteur libre (86, 86.1) est mesuré au niveau de la position de l'objet (81) déposé, et
un dispositif de commande (5),
**caractérisé en ce que**
le dispositif de fusion (4) comprend un dispositif de reconnaissance d'artéfacts (7), dans lequel le dispositif de reconnaissance d'artéfacts (7) est conçu pour attribuer un attribut d'orientation (60) aux objets (81) déposés dans la carte d'environnement (80) et
pour un secteur dans le secteur de capteur (83.1, 83.2, 83.3) de l'au moins un capteur (2), dans lequel un secteur libre (86, 86.1) est mesuré, la probabilité d'existence d'un objet (81), qui est déposé dans le secteur dans la carte d'environnement (80) correspondant au secteur, est réduite en fonction de l'attribut d'orientation (60) attribué.
